# EUROPÄISCHE PATENTSCHRIFT

(11) **EP 3 145 622 B1**
(45) Veröffentlichungstag und Bekanntmachung des Hinweises auf die Patenterteilung: **04.07.2018**
(21) Anmeldenummer: 15726898.8
(22) Anmeldetag: 21.05.2015
(51) Int. Cl.: B01D 53/14, F02C 3/20

(54) **VORRICHTUNG UND VERFAHREN ZUR BEHANDLUNG EINES GASSTROMS**
DEVICE AND METHOD FOR TREATING A GAS FLOW
DISPOSITIF ET PROCÉDÉ SERVANT À TRAITER UN FLUX GAZEUX

(30) Priorität: 23.05.2014 DE 102014209924
(43) Veröffentlichungstag der Anmeldung: 29.03.2017
(73) Patentinhaber: Enzenhofer, Matthias, 74072 Heilbronn (DE)
(72) Erfinder: Enzenhofer, Matthias, 74072 Heilbronn (DE)
(74) Vertreter: Glawe, Delfs, Moll
(86) Internationale Anmeldenummer: PCT/EP2015/061301
(87) Internationale Veröffentlichungsnummer: WO 2015/177296

(56) Entgegenhaltungen:
- EP-A1- 1 788 222
- EP-A1- 1 878 485
- EP-B1- 1 639 233
- DE-A1-102005 009 625
- US-A- 5 198 000
- US-A1- 2011 171 106

## Beschreibung

Die Erfindung betrifft eine Vorrichtung und ein Verfahren zur Behandlung eines Gasstroms.

Kraft-Wärme-Kopplung (KWK) bezeichnet die gleichzeitige Umwandlung eingesetzter Primärenergie in Strom und Wärme. KWK ermöglicht eine hohe Effizienz bei der Energieumwandlung und ist deshalb insbesondere für dezentrale Energieversorgungslösungen für Industrie oder Landwirtschaft geeignet. In KWK-Anlagen werden heutzutage oftmals (Mikro-)Gasturbinen eingesetzt, die mit einer Vielzahl möglicher Brennstoffe betrieben werden können und eine besonders klimaschonende Erzeugung von Wärme und Strom ermöglichen.

Eine Gasturbine hat einen Lufteinlass, einen Verdichterteil, eine Brennkammer, in der die verdichtete Luft mit der Brennkammer durch einen Brennstoffeinlass zugeführtem Brennstoff vermischt und das Brennstoff-Luft-Gemisch verbrannt wird. Das entstehende Heißgas wird durch die eigentliche Turbine geführt, die auf einer Welle mit dem Kompressor sitzt und diesen dadurch antreibt. Zur Stromerzeugung kann ein Generator durch die rotierende Welle betrieben werden.

In vielen industriellen Bereichen, wie beispielsweise der Druckindustrie oder auch in Lackierbetrieben, fallen große Mengen an Abluft an, die mit flüchtigen organischen Verbindungen (VOC) belastet sind. Diese Abluftmengen müssen von den VOCs befreit werden, um nationale als auch internationale Emissionsgrenzwerte einzuhalten und gefahrlos in die Umwelt abgegeben werden zu können.

Weiterer Stand der Technik ist der US 5,198,000 und der US 2011/1071106 zu entnehmen. VOCs eignen sich als Brennstoff für Mikro-Gasturbinen. Es ist deshalb Aufgabe der Erfindung eine Vorrichtung und ein Verfahren vorzusehen, die zum einen eine ausreichende Reinigung von mit VOCs belasteter Abluft und zum anderen die Erzeugung von Strom und Wärme aus den abgeschiedenen VOCs ermöglichen.

Diese Aufgabe wird in einem ersten Aspekt durch eine Vorrichtung zur Behandlung eines Gasstroms gemäß dem Anspruch 1 mit zumindest einer Absorptionsvorrichtung, die geeignet ist, brennbare Bestandteile aus einem ersten Gasstrom mittels Absorption durch ein flüssiges Medium zu entfernen; einer Desorptionsvorrichtung, die geeignet ist, in dem flüssigen Medium gelöste brennbare Bestandteile in einen zweiten Gasstrom, bevorzugt einen Luftstrom, abzuscheiden, und einer Mikro-Gasturbine gelöst. Dabei ist die Konzentration an brennbaren Bestandteilen in dem zweiten Gasstrom auf einen vorbestimmten Wert einstellbar und die Mikro-Gasturbine wird mit dem zweiten Gasstrom mit den brennbaren Bestandteilen als Brennstoff versorgt. Die Mikro-Gasturbine wird dabei lediglich mit dem zweiten Gasstrom als Brennstoff versorgt. Es wird kein zusätzlicher Brennstoff in Form von z.B. Erdgas benötigt. Bevorzugt wird der zweite Gasstrom, der aus Luft mit darin enthaltenen brennbaren Bestandteilen besteht, dem Lufteinlass der Gasturbine zugeführt, ohne dass weiterer Brennstoff über den Brennstoffeinlass der Brennkammer zugeführt wird.

Mit der erfindungsgemäßen Vorrichtung können brennbare Bestandteile, die insbesondere VOCs sein können, sicher aus einem Gasstrom, der insbesondere ein Abluftstrom einer Produktionsanlage sein kann, entfernt werden. Die mittels Absorption in ein flüssiges Medium abgeschiedenen brennbaren Bestandteile werden in der Desorptionsvorrichtung in einen zweiten Gasstrom abgeschieden und auf einen vorbestimmten Wert aufkonzentriert, um einen für den Betrieb der Mikro-Gasturbine geeigneten Gasstrom zu erzeugen. Durch den Betrieb der Mikro-Gasturbine mit den brennbaren Bestandteilen aus dem Abluftstrom ist eine in der Gesamtschau nahezu energieneutrale Abluftreinigung möglich.

In einer weitergehenden Ausführungsform wird zum Starten der Mikro-Gasturbine ein vorbestimmter Brennstoff, der verschieden von dem zweiten Gasstrom mit den brennbaren Bestandteilen ist, verwendet. Durch die Verwendung eines weiteren Brennstoffs, der beispielsweise Erdgas sein kann, zum Starten der Mikro-Gasturbine wird ein sicheres Anlaufen der Mikro-Gasturbine gewährleistet, sodass im weiteren Betrieb der Mikro-Gasturbine auf die Verbrennung der in dem zweiten Gasstrom befindlichen brennbaren Bestandteile umgeschaltet werden kann. Der weitere Brennstoff kann dabei zum Starten der Mikro-Gasturbine durch den Brennstoffeinlass der Brennkammer zugeführt werden.

Die Absorptionsvorrichtung der erfindungsgemäßen Vorrichtung umfasst dabei bevorzugt Folgendes: eine Trägeranordnung mit einer Zufuhr und einem Auslass für das flüssige Medium, wobei die Trägeranordnung derart gestaltet ist, dass das flüssige Medium zwischen Zufuhr und Auslass über eine Anzahl an Trägern geleitet wird und auf der Oberfläche der Träger einen fließenden Flüssigkeitsfilm bildet; und eine Gasstromführung, die derart gestaltet ist, dass der erste Gasstrom mit dem fließenden Flüssigkeitsfilm auf der Oberfläche der Anzahl an Trägern in Kontakt kommt.

Bevorzugt ist der fließende Flüssigkeitsfilm ein Fallfilm, der im Wesentlichen senkrecht von oben nach unten fließt. Der Gasstrom wird bevorzugt im Kreuzstrom zu dem Flüssigkeitsfilm geführt. Als Träger werden bevorzugt poröse Schläuche, etwa wärmebehandelte Strickschläuche aus Kunststoff, verwendet.

Die vorgehend beschriebene Absorptionsvorrichtung ermöglicht eine gründliche Entfernung von brennbaren Bestandteilen, insbesondere VOCs, aus einem Gasstrom. Durch die Aufnahme der brennbaren Bestandteile in das flüssige Medium ist ein einfacher Weitertransport zu der Desorptionsvorrichtung der erfindungsgemäßen Vorrichtung, die räumlich getrennt von der Absorptionsvorrichtung angeordnet sein kann, möglich.

Als Desorptionsvorrichtung wird bevorzugt eine Desorptionskolonne verwendet, in der das mit den brennbaren Bestandteilen beladene flüssige Medium, ggf. nach Erwärmung, über den Kolonnenkopf zugeführt wird, dann über Füllkörper bis in den Kolonnensumpf läuft, aus dem es erneut der Absorption zugeführt wird. Dabei wird das flüssige Medium in der Kolonne mit einem Gas, bevorzugt Luft, im Gegenstrom in Kontakt gebracht, sodass die brennbaren Bestandteile aus dem flüssigen Medium in den Gasstrom der Desorptionsvorrichtung übergehen.

In einem zweiten Aspekt der Erfindung wird die Aufgabe durch ein Verfahren zur Behandlung eines Gasstroms gemäß dem Anspruch 4 gelöst wird. Mit dem erfindungsgemäßen Verfahren lässt sich in prozessual einfacher Weise ein als Brennstoff für die Mikro-Gasturbine geeigneter zweiter Gasstrom aus einem ersten Gasstrom, der beispielsweise ein Abgasstrom einer Industrieanlage sein kann, erzeugen. Durch die Verwendung der in dem Abluftstrom befindlichen brennbaren Bestandteile als Brennstoff für die Mikro-Gasturbine ist eine in der Gesamtschau nahezu energieneutrale Abluftreinigung möglich.

In einer weitergehenden Ausgestaltung des Verfahrens kann zum Starten der Mikro-Gasturbine ein vorbestimmter Brennstoff, der verschieden von dem zweiten Gasstrom mit den brennbaren Bestandteilen ist, verwendet werden. Durch die Verwendung eines weiteren Brennstoffs, der beispielsweise Erdgas sein kann, zum Starten der Mikro-Gasturbine kann ein sicheres Anlaufen der Mikro-Gasturbine sichergestellt werden, sodass im weiteren Verlauf auf eine Verbrennung von in dem Abluftstrom befindlichen brennbaren Bestandteilen in der Mikro-Gasturbine umgeschaltet werden kann.

Im Folgenden wird die Erfindung unter Bezugnahme auf die beiliegenden Zeichnungen näher erläutert. Dabei bezeichnen gleiche Bezugszeichen gleiche oder gleichwirkende Elemente. Es zeigen:
- Fig. 1: eine schematische Darstellung einer erfindungsgemäßen Absorptionsvorrichtung;
- Fig. 2: eine schematische Darstellung einer erfindungsgemäßen Desorptionsvorrichtung;
- Fig. 3: eine schematische Darstellung einer Mikro-Gasturbine; und
- Fig. 4: eine schematische Darstellung der erfindungsgemäßen Vorrichtung zur Behandlung von Gasströmen.

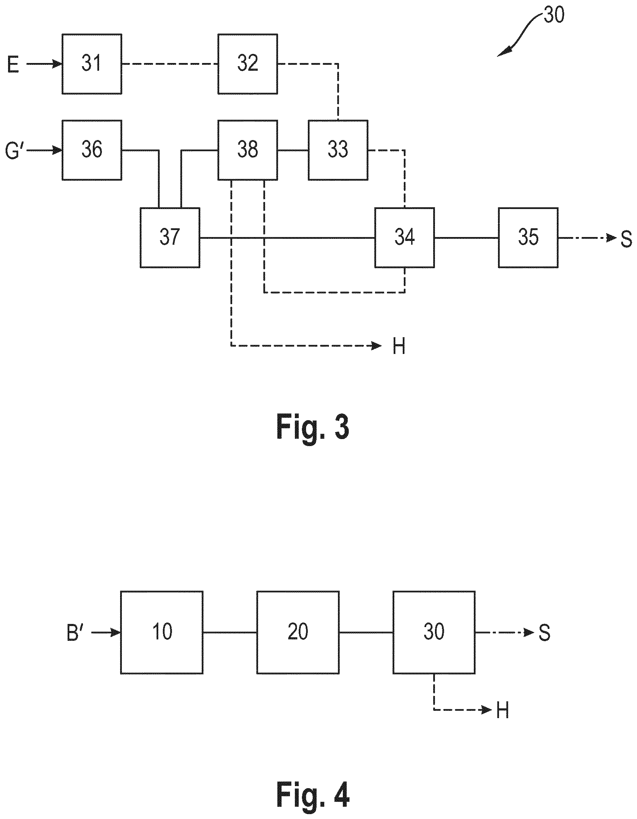

Fig. 4 zeigt schematisch die erfindungsgemäße Vorrichtung zur Behandlung eines Gasstroms mit einer Absorptionsvorrichtung 10, einer Desorptionsvorrichtung 20 und einer Mikro-Gasturbine 30.

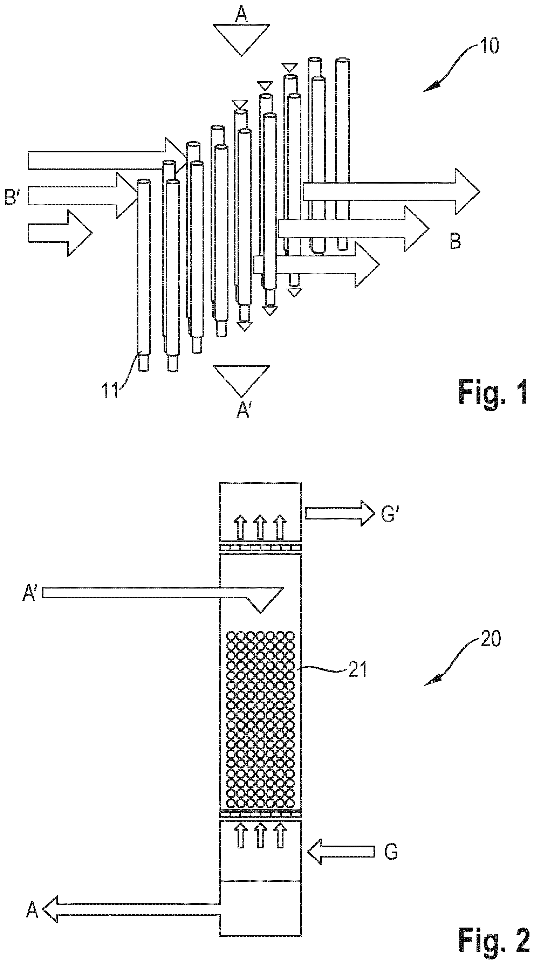

Wie in der Fig. 1 näher gezeigt, wird ein mit brennbaren Bestandteilen, die insbesondere VOCs sein können, beladener Gasstrom B', der beispielsweise ein Abluftstrom sein kann, in die Absorptionsvorrichtung 10 eingebracht. Die Absorptionsvorrichtung 10 weist dabei eine Trägeranordnung mit einer Zufuhr und einem Auslass für ein flüssiges Medium A auf, wobei die Trägeranordnung derart gestaltet ist, dass das flüssige Medium zwischen Zufuhr und Auslass über eine Anzahl an Trägern 11 geleitet wird und auf der Oberfläche der Träger 11 einen fließenden Flüssigkeitsfilm bildet. Die Gasstromführung der Absorptionsvorrichtung 10 ist dabei derart gestaltet, dass der erste Gasstrom B' mit dem fließenden Flüssigkeitsfilm auf der Oberfläche der Anzahl an Trägern 11 in Kontakt kommt, sodass die brennbaren Bestandteile in dem ersten Gasstrom B' durch das flüssige Medium A absorbiert werden können und nach dem Durchgang durch die Anzahl an Trägern 11 ein gereinigter erster Gasstrom B die Absorptionsvorrichtung 10 verlassen kann. Nach der Kontaktierung mit dem belasteten ersten Gasstrom B' wird das nunmehr mit brennbaren Bestandteilen versetzte flüssige Medium A' über einen Auslass aus der Absorptionsvorrichtung 10 geführt und im Weiteren der in der Figur 2 gezeigten Desorptionsvorrichtung 20 zugeführt.

Die Desorptionsvorrichtung 20 weist dabei eine Kolonne 21 auf, der das erhitzte, mit brennbaren Bestandteilen versetzte flüssige Medium A' zugeführt wird. Das flüssige Medium A' wird im Kopf der Kolonne 21 aufgegeben und im Gegenstrom zu dem flüssigen Medium A' wird Luft als ein zweiter Gasstrom G geführt, sodass sich dieser mit den brennbaren Bestandteilen aus dem flüssigen Medium A' anreichern kann. Dadurch kann zum einen das flüssige Medium A' regeneriert, im Sumpf der Kolonne 21 aufgefangen und im Weiteren in gereinigter Form wieder der Absorptionsvorrichtung 10 zugeführt werden. Zum anderen kann der zweite Gasstrom G mit den brennbaren Bestandteilen angereichert werden, sodass ein für die Verbrennung in einer Mikro-Gasturbine geeigneter Gasstrom G' erzeugt werden kann. Die Desorptionsvorrichtung 20 ist dabei insbesondere derart ausgestaltet, dass die Konzentration an brennbaren Bestandteilen in dem zur Verbrennung geeigneten zweiten Gasstrom G' auf einen vorbestimmten Wert einstellbar ist. Dies kann z.B. durch Regelung des Volumenstroms des Gasstroms G erreicht werden.

Als brennbarer Bestandteil in dem zweiten Gasstrom eignet sich z.B. Butanol, wobei eine Verbrennung in einer Mikro-Gasturbine ab einer Konzentration von 1,8 g Butanol pro Kubikmeter Luft möglich ist. Insbesondere für die Verbrennung geeignet ist eine Konzentration im Bereich von 3,3-3,8 g Butanol pro Kubikmeter Luft.

Die Verbrennung des zweiten Gasstroms G' erfolgt in einer Mikro-Gasturbine 30, die in der Fig. 3 beispielhaft schematisch dargestellt ist. Zum einen wird durch einen Verdichter 37 der Gasstrom G' über einen Luftfilter 36 angesaugt und üblicherweise auf Drücke von über 5 Bar verdichtet. Über einen Brennstoffverdichter 32 wird ggf. zum Start Erdgas E über einen Brennstofffilter 31 angesaugt und verdichtet. Im Weiteren ist in der Mikro-Gasturbine 30 ein Abgaswärmetauscher 38 vorgesehen um die Wärme der Turbine 34 zur Erwärmung der in dem Luftverdichter 37 verdichteten Verbrennungsluft (Gasstrom G') zu verwenden.

Nachdem ggf. zum Start der Turbine noch Erdgas E zugeführt wurde, wird die Erdgaszufuhr abgestellt und die Verbrennung in der Brennkammer nur noch durch den Gasstrom G' unterhalten, in dem sowohl die Verbrennungsluft als auch der brennbare Bestandteil als Brennstoff enthalten sind. Ggf. sind zwischen der Brennkammer 33 und dem Verdichter 37 herkömmliche Flammenrückschlagverhinderungsmittel vorzusehen, um die Verbrennung auf die Brennkammer 33 zu beschränken. Die Brennkammer 33 enthält für den Start der Turbine eine Zündvorrichtung. Die heißen Verbrennungsgase werden anschließend in der Turbine 34 entspannt, um so den Luftverdichter 37 und einen Generator 35 zur Stromerzeugung anzutreiben. Als Generator 35 eignet sich beispielsweise ein Permanentmagnet-Generator, der ohne Zwischenschaltung eines mechanischen Getriebes betrieben werden kann.

Durch den Generator wird elektrische Energie S erzeugt, die im Weiteren beispielsweise zum Betrieb der Absorptionsvorrichtung 10, der Desorptionsvorrichtung 20 oder zur Einspeisung in das Stromnetz verwendet werden kann. Im Weiteren wird durch den Abgaswärmetauscher 38 Heißgas H bereitgestellt, das zur weiteren Nutzung in Prozessen, wie etwa der Erwärmung des flüssigen Mediums A' in der Desorptionsvorrichtung 20, verwendet werden kann.

Die vorgeschlagene Vorrichtung ermöglicht die Reinigung eines Abluftstromes und erlaubt gleichzeitig die Erzeugung von elektrischer Energie und Wärme, um so eine nahezu energieneutrale Abluftreinigung zu ermöglichen.

## Patentansprüche

1. Vorrichtung zur Behandlung eines Gasstroms mit zumindest
einer Absorptionsvorrichtung (10), die geeignet ist, brennbare Bestandteile aus einem ersten Gasstrom mittels Absorption durch ein flüssiges Medium zu entfernen;
einer Desorptionsvorrichtung (20), die geeignet ist, in dem flüssigen Medium gelöste brennbare Bestandteile in einen zweiten Gasstrom abzuscheiden; und
einer Gasturbine (30),
wobei die Desorptionsvorrichtung geeignet ist, die Konzentration an brennbaren Bestandteilen in dem zweiten Gasstrom auf einen vorbestimmten Wert aufzukonzentrieren, sodass ein für den Betrieb der Gasturbine geeigneter Gasstrom erzeugt wird; und wobei die Gasturbine mit dem zweiten Gasstrom mit den brennbaren Bestandteilen als Brennstoff versorgt wird.

2. Vorrichtung nach Anspruch 1, wobei der Gasturbine kein weiterer Brennstoff außer dem zweiten Gasstrom mit den brennbaren Bestandteilen zugeführt wird.

3. Vorrichtung nach einem der vorhergehenden Ansprüche, wobei die Absorptionsvorrichtung Folgendes umfasst:
eine Trägeranordnung mit einer Zufuhr und einem Auslass für das flüssige Medium, wobei die Trägeranordnung derart gestaltet ist, dass das flüssige Medium zwischen Zufuhr und Auslass über eine Anzahl an Trägern (11) geleitet wird und auf der Oberfläche der Träger einen fließenden Flüssigkeitsfilm bildet; und
eine Gasstromführung, die derart gestaltet ist, dass der erste Gasstrom mit dem fließenden Flüssigkeitsfilm auf der Oberfläche der Anzahl an Trägern in Kontakt kommt.

4. Verfahren zur Behandlung eines Gasstroms mit den Schritten:
Entfernen von brennbaren Bestandteilen aus einem ersten Gasstrom mittels Absorption durch ein flüssiges Medium;
Abscheiden der in dem flüssigen Medium gelösten brennbaren Bestandteile in einen zweiten Gasstrom mittels Desorption; wobei ein Einstellen der Konzentration an brennbaren Bestandteilen in dem zweiten Gasstrom auf einen vorbestimmten Wert bewirkt wird, sodass ein für den Betrieb der Gasturbine geeigneter, aufkonzentrierter Gasstrom erzeugt wird; und
Zuführen des zweiten Gasstroms mit den brennbaren Bestandteilen als Brennstoff für eine Gasturbine.

5. Verfahren nach Anspruch 4, wobei der Gasturbine kein weiterer Brennstoff außer dem zweiten Gasstrom mit den brennbaren Bestandteilen zugeführt wird.

## Claims

1. A device for treating a gas stream, having at least
an absorption device (10) which is suitable for removing flammable constituents from a first gas stream by absorption using a liquid medium;
a desorption device (20) which is suitable for separating flammable constituents dissolved in the liquid medium into a second gas stream; and
a gas turbine (30),
wherein the desorption device is suitable for concentrating the concentration of flammable constituents in the second gas stream to a predetermined value, such that a gas stream which is suitable for operation of the gas turbine is generated; and wherein the gas turbine is supplied with the second gas stream, containing the flammable constituents, as fuel.

2. The device as claimed in claim 1, wherein the gas turbine is supplied with no other fuel in addition to the second gas stream containing the flammable constituents.

3. The device as claimed in either of the preceding claims, wherein the absorption device comprises the following:
a carrier arrangement having an inlet and an outlet for the liquid medium, the carrier arrangement being configured such that, between the inlet and the outlet, the liquid medium is guided past a number of carriers (11) and forms a flowing liquid film on the surface of the carriers; and
a gas stream guide which is configured such that the first gas stream comes into contact with the flowing liquid film on the surface of the number of carriers.

4. A method for treating a gas stream, having the steps of:
removing flammable constituents from a first gas stream by absorption using a liquid medium;
separating the flammable constituents dissolved in the liquid medium into a second gas stream by desorption;
wherein setting the concentration of flammable constituents in the second gas stream to a predetermined value is caused, such that a concentrated gas stream which is suitable for operation of the gas turbine is generated; and
supplying the second gas stream, containing the flammable constituents, as fuel to a gas turbine.

5. The method as claimed in claim 4, wherein the gas turbine is supplied with no other fuel in addition to the second gas stream containing the flammable constituents.

## Revendications

1. Dispositif pour le traitement d'un flux gazeux comprenant au moins
un dispositif d'absorption (10) qui est approprié pour éliminer des constituants combustibles d'un premier flux gazeux par absorption par un milieu fluide ;
un dispositif de désorption (20) qui est approprié pour séparer les constituants combustibles dissous dans le milieu fluide dans un deuxième flux gazeux ; et
une turbine à gaz (30),
le dispositif de désorption étant approprié pour concentrer à une valeur prédéterminée la concentration en constituants combustibles dans le deuxième flux gazeux de telle sorte qu'un flux gazeux approprié pour le fonctionnement de la turbine à gaz soit produit ; et
la turbine à gaz étant alimentée avec le deuxième flux gazeux comprenant les constituants combustibles en tant que combustible.

2. Dispositif selon la revendication 1, dans lequel aucun combustible supplémentaire à l'exception du deuxième flux gazeux avec les constituants combustibles n'est acheminé à la turbine à gaz.

3. Dispositif selon l'une quelconque des revendications précédentes, dans lequel le dispositif d'absorption comprend :
un agencement de support avec une alimentation et une sortie pour le milieu fluide, l'agencement de support étant configuré de telle sorte que le milieu fluide soit guidé entre l'alimentation et la sortie par le biais d'une pluralité de supports (11) et forme à la surface du support un film de liquide coulant ; et
un guidage du flux gazeux qui est configuré de telle sorte que le premier flux gazeux vienne en contact avec le film de liquide coulant à la surface de la pluralité de supports.

4. Procédé de traitement d'un flux gazeux comprenant les étapes suivantes :
élimination de constituants combustibles d'un premier flux gazeux par absorption par un milieu fluide ;
séparation des constituants combustibles dissous dans le milieu fluide en un deuxième flux gazeux par désorption ;
un ajustement à une valeur prédéterminée de la concentration en constituants combustibles dans le deuxième flux gazeux étant réalisé de telle sorte qu'un flux gazeux concentré, approprié pour le fonctionnement de la turbine à gaz, soit produit ; et
acheminement du deuxième flux gazeux avec les constituants combustibles en tant que combustible pour une turbine à gaz.

5. Procédé selon la revendication 4, dans lequel aucun combustible supplémentaire à l'exception du deuxième flux gazeux avec les constituants combustibles n'est acheminé à la turbine à gaz.
